# EUROPEAN PATENT APPLICATION

(11) **EP 2 343 181 A1**
(43) Date of publication of application: **13.07.2011**
(21) Application number: 11250014.5
(22) Date of filing: 07.01.2011
(51) Int. Cl.: B29C 70/54

(54) **Connection port for composite moulding**

(30) Priority: 09.01.2010 GB 1000327
(71) Applicant: GSSC, Inc., Clearwater, FL 33760 (US)
(72) Inventor: Tur, Charles, 44430 Les Vastres (FR); Wiegand, James A., Auburn, WA 98092 (US)
(74) Representative: Brown, Michael Stanley

(57) **Abstract**

A method of making a composite moulding includes providing a base (12) having a through bore, a clamping ring (8) and a fitting (1). The method includes the following steps:-
a) placing the base (12) on top of a fibre pack (27),
b) placing a plastic film (16) over the base (12) and the fibre pack (27),
c) engaging the clamping ring (8) with the base (12) in such manner that the plastic film (16) is clamped in sealing engagement with the base (12),
d) removing that part (21) of the plastic film (16) that extends over the bore in the base (12), and
e) engaging the fitting (1) with the base (12) in sealing engagement with the base (12) and the clamping ring (8).

## Description

### Field of the Invention

This invention relates to resin moulding systems and, in particular, to the production of composite mouldings.

The composites industry produces composite parts by several different processes, including the film infusion vacuum process in which a mould is laid up with a dry fibre reinforcement pack within the boundaries of the mould edge.

A seamless releasable plastic thin film is then laid over the fibre pack to cover the fibre and the film is larger in area than the fibre pack allowing the film to extend beyond the fibre edges in order that the film may be sealed to the mould flange by a continuous tacky tape.

The mould, fibre pack and film assembly is designed to be vacuum-tight and a sealable fitting or fittings is or are used to penetrate the film to provide a means to evacuate air from the fibre pack by use of a vacuum source. Also a further fitting or fittings is or are employed to provide a connection to a pipe or valve which will allow mixed reactive resin to flow into the fibre pack so that all the fibre is impregnated with the resin mix.

On completion of the resin impregnation step, the assembly remains on vacuum whilst the resin cures sufficiently to allow removal of the vacuum and then the film whereupon the cured moulding can be released from the mould.

It is an object of the present invention to provide an improved resin moulding system.

It is also an object of the present invention to provide an improved method of making composite mouldings.

### Summary of the Invention

According to a first aspect of the present invention there is provided a resin moulding system which includes:-
a base which, in use, is placed on top of a fibre pack,
a clamping ring which, in use, can be engaged with the base in such manner that a plastic film can be clamped in sealing engagement with the base, and
a fitting that can be engaged with the base in sealing engagement with the base and the clamping ring.

According to a second aspect of the present invention there is provided a method of making a composite moulding which includes providing a base having a through bore, a clamping ring and a fitting, the method including the following steps:-
a) placing the base on top of a fibre pack,
b) placing a plastic film over the base and the fibre pack,
c) engaging the clamping ring with the base in such manner that the plastic film is clamped in sealing engagement with the base,
d) removing that part of the plastic film that extends over a bore in the base, and
e) engaging the fitting with the base in sealing engagement with the base and the clamping ring.

The fitting provides means for connection of the vacuum, resin inlet and, possibly, pressure sensing devices which are needed for carrying out the moulding operation. The components of the system not only serve to penetrate the infusion film in a secure manner but also have absolute vacuum integrity. They are also designed to be reusable for further moulding cycles.

A further advantage is that no form of consumable sealant compound is required to achieve vacuum security.

Other preferred features and advantages of the present invention will be apparent from the following detailed description of one embodiment thereof.

### Brief Description of the Drawings

Figure 1 is a vertical sectional view of the components of the moulding system assembled together,
Figure 2 is an exploded vertical sectional view of the components shown in Figure 1, and
Figure 3 shows three stages in the production of a composite moulding.

### Description of the Preferred Embodiment

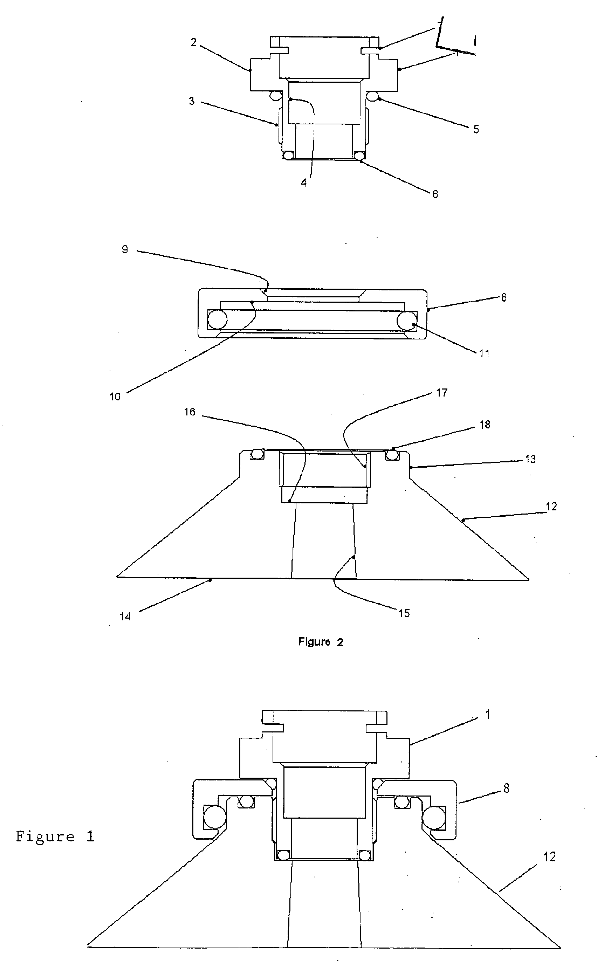

Figure 1 shows a machined circular fitting assembly in cross-section. It comprises three main components, namely a universal top section fitting 1, a clamping ring 8 and a base 12. The assembly is screwed together using the universal fitting top section 1, which is screwed into the base 12 with the clamping ring 8, firmly clamped between the top section fitting 1 and the base 12. As shown in the drawings, the upper portion of the base 12 is cylindrical and the clamping ring 8 fits over the cylindrical portion of the base.

Figure 2 illustrates the three individual main components in detail. The universal top section fitting 1 comprises a single machined ring with an outer large diameter 2 having a knurled surface to facilitate hand tightening. A male thread 3 on the fitting 1 engages with a corresponding female thread 17 in the base 12. The cylindrical internal surfaces 4 of the universal top section fitting 1 are machined to fit and seal a standard injection valve, pipe fitting or sensor (not shown). A first O-ring seal 5 is positioned in contact with an external shoulder of the fitting 1 and engages with a seal profile 9 of the clamping ring 8. A second O-ring seal 6 is located within a circular channel in the lower face of the fitting 1 and engages with a sealing surface 16 within the base 12. A machined slot 7 adjacent the top of the fitting 1 is provided to locate and lock with a spring clip (not shown) on any of the various pipe, valve or sensor connections that can be inserted into the fitting assembly.

The clamping ring 8 has an internal O-ring seal 11 to provide a close sealing fit with the outer surface 13 of the base 12. An internal downwardly facing flat surface 10 of the clamping ring 8 has a sealing engagement with an O-ring seal 18 contained in an upwardly facing circular channel in the base 12. The base 12 has a through bore 15 which is tapered outwardly towards the lower end thereof and the base 12 has a flat lower surface 14 and a generally conical upwardly presented surface.

The above fitting components are used and assembled to seal an infusion film in the following manner:-
Once a fibre pack 27 has been placed onto a mould, one or more bases 12 are placed as desired onto the fibre surface at strategic points determined by the mould geometry and the technical knowledge of the moulder. The wide flat lower surface 14 of the base 12 is thus placed onto the fibre pack 27.

A suitable size sheet of infusion film 16 is then cut and placed over the entire fibre and mould area and sealed at the mould peripheral flange surface.

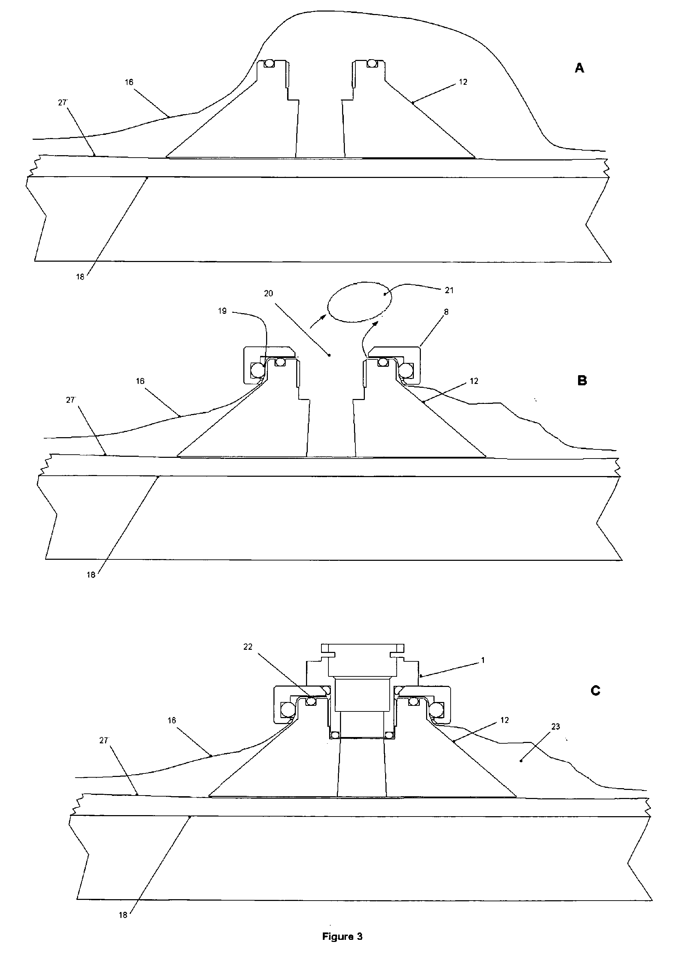

As shown in Figure 3, image A, the base 12 rests on the fibre pack 27 positioned on the upper surface 18 of a mould. The infusion film 16 covers the entire assembly.

Figure 3, image B illustrates the film 16, which has been manually stretched over the base 12 and held down by the clamping ring 8 aided by the interference fit of the O-ring seal 11 at circular location 19. Whilst the film 16 is under tension, that part of the film at the open orifice zone 20 of the clamping ring 8 (and thus of the bore of the cylindrical upper portion of the base 12) is cut away as a disc shape 21 and discarded. The top fitting 1 is then engaged with the base 12.

The clamping ring 8 is held firmly in place and prevented from rotating as the universal top fitting 1 is screwed through the clamping ring 8 onto the base 12. The film 16 is now firmly clamped and sealed at circular location 22 (see Figure 3C) against any atmospheric air pressure entering between the mould face 18 and the underside of the infusion film 16 when vacuum is applied to the air void 23 bounded by the infusion film 16. Injection of the resin into the sealed mould is then carried out via a pipe or other connector engaged with the fitting 1, and the resin is then allowed or caused to cure.

The tapered bore 15 of the base 12 allows easy removal of any hardened resin after resin infusion and cure.

In use, the base 12 may be machined to fit over a resin "runner" to allow the resin to feed from the fitting more efficiently. The "runner" may be a consumable tubular plastic spiral wrap or a reusable silicone profile to aid resin flow.

## Claims

1. A resin moulding system which includes:-
a base which, in use, is placed on top of a fibre pack,
a clamping ring which, in use, can be engaged with the base in such manner that a plastic film can be clamped in sealing engagement with the base, and
a fitting that can be engaged with the base in sealing engagement with the base and the clamping ring.

2. A resin moulding system as claimed in Claim 1, in which the base includes a cylindrical portion and in which the clamping ring fits over the cylindrical portion of the base.

3. A resin moulding system as claimed in Claim 2, in which the cylindrical portion of the base is internally threaded and has threaded engagement with an externally threaded portion of the fitting.

4. A resin moulding system as claimed in Claim 3, in which the fitting carries a first O-ring seal arranged for sealing engagement with the clamping ring and a second O-ring seal arranged for sealing engagement with the base.

5. A method of making a composite moulding which includes providing a base having a through bore, a clamping ring and a fitting, the method including the following steps:-
a) placing the base on top of a fibre pack,
b) placing a plastic film over the base and the fibre pack,
c) engaging the clamping ring with the base in such manner that the plastic film is clamped in sealing engagement with the base,
d) removing that part of the plastic film that extends over the bore in the base, and
e) engaging the fitting with the base in sealing engagement with the base and the clamping ring.

6. A method as claimed in Claim 5, in which the base includes a cylindrical portion having the through bore and in which the clamping ring fits over the cylindrical portion of the base.

7. A method as claimed in Claim 6, in which the cylindrical portion of the base is internally threaded and in which an externally threaded portion of the fitting has threaded engagement with the internal thread formation of the base.

8. A method as claimed in Claim 7, in which the fitting carries a first O-ring seal which has sealing engagement with the clamping ring and a second O-ring seal which has sealing engagement with the base.
